# EUROPÄISCHE PATENTANMELDUNG

(11) **EP 4 239 190 A1**
(43) Veröffentlichungstag der Anmeldung: **06.09.2023**
(21) Anmeldenummer: 22159588.7
(22) Anmeldetag: 02.03.2022
(51) Int. Cl.: F03D 17/00, G06F 17/40

(54) **VERFAHREN UND WINDPARKSTEUERUNG SOWIE WINDPARK ZUM SPEICHERN VON MESSWERTEN EINER WINDENERGIEANLAGE ODER EINES WINDPARKS**

(71) Anmelder: Wobben Properties GmbH, 26607 Aurich (DE)
(72) Erfinder: Busker, Kai, 26629 Großefehn (DE)
(74) Vertreter: Eisenführ Speiser

(57) **Zusammenfassung**

Die Erfindung betrifft ein Verfahren (10) zum Speichern von Messwerten (16a, 16b) einer Windenergieanlage (100) oder eines Windparks (112), das ein Aufnehmen (14a, 14b) mehrerer zeitlich aufeinanderfolgender Messwerte (16a, 16b) einer Messgröße (12a, 12b) umfasst. Das Verfahren (10) umfasst außerdem ein Erfassen (22a, 22b) einer Änderung (24a, 24b) zwischen einem vorherigen Messwert (29a, 29b) der aufgenommenen Messwerte (16a, 16b) und dem zeitlich darauffolgenden nachherigen Messwert (30a, 30b) der aufgenommenen Messwerte (16a, 16b) und ein Vergleichen (26a, 26b) der Änderung (24a, 24b) mit einem einstellbaren oder vordefinierten Schwellenwert (28a, 28b). Das Verfahren umfasst weiter ein Speichern (32a, 32b) des nachherigen Messwerts (30a, 30b) im Fall, dass die Änderung (24a, 24b) oberhalb des vordefinierten Schwellenwerts (28a, 28b) liegt oder ein Verwerfen (40a, 40b) des nachherigen Messwerts (30a, 30b) im Fall, dass die Änderung (24a, 24b) unterhalb des vordefinierten Schwellenwerts (28a, 28b) liegt.

Die Erfindung betrifft ferner eine Windparksteuerung (122) sowie einen Windpark (112) mit einer Windparksteuerung (122).

## Beschreibung

Die Erfindung betrifft den Bereich der Windenergieanlagen und hierbei insbesondere das Speichern von Daten einer Windenergieanlage oder eines Windparks während des Betriebs.

Aus dem Stand der Technik sind prozessgesteuerte Speichereinheiten bekannt, die Daten in vordefinierten Intervallen auf einem Speichermedium ablegen, um diese Daten bei Bedarf auswerten zu können. Solche Speichereinheiten werden auch Datenlogger genannt. Bei den zu speichernden Daten handelt es sich häufig um Messwerte, die auch erfasste Steuer- und Regelparameter einer zu steuernden oder regelnden Windenergieanlage umfassen. Solche gespeicherten Daten können verwendet werden, um einen allgemeinen Betrieb einer Windenergieanlage im Nachhinein zu bewerten oder auftretende Fehler oder Abweichungen im Betrieb nachvollziehen und beurteilen zu können.

Im Fall von Windenergieanlagen ist, insbesondere zur aussagekräftigen Bewertung eines Betriebs der Windenergieanlage, ein sehr großer in der Vergangenheit liegender Zeitraum zu betrachten, da beispielsweise bestimmte Betriebssituationen nur zu bestimmten Jahreszeiten auftreten. Auch Fehler, die beispielsweise in einem mit der Windenergieanlage verbundenen Versorgungsnetz auftreten, aber keine oder nur eine geringe Auswirkung auf die mit dem Netz verbundenen Komponenten haben, werden teilweise erst spät erkannt.

Eine Ursache solcher Fehler ist zum Zeitpunkt des Erkennens daher häufig schon in weit zurückliegenden Ereignissen begründet. Somit ist es auch zum Nachvollziehen derartiger Fehler vorteilhaft, weit in der Vergangenheit liegende Daten zur Verfügung zu haben.

Voraussetzung für einen aus den genannten Anforderungen resultierenden langen Aufzeichnungszeitraum, beispielsweise über mehrere Monate, ist, dass eine Vielzahl von unterschiedlichen Messgrößen mit einer Vielzahl von Messwerten gespeichert werden müssen. Ein großer Speicherbedarf resultiert daraus. Ein derartiger Speicherbedarf umfasst beispielsweise mehrere 100 MB pro Tag, so dass der Speicherbedarf zum Ermöglichen eines Rückgriffs auf Messwerte von einer Vielzahl von Messgrößen auf mehrere in der Vergangenheit liegende Monate in einem Windpark mit herkömmlichen Speichermitteln nahezu nicht realisierbar ist.

Aufgabe der vorliegenden Erfindung ist es daher, den Problemen des Standes der Technik zu begegnen. Insbesondere soll eine Möglichkeit gefunden werden, eine Vielzahl von Messwerten von Windenergieanlagen oder Windparks über einen langen Zeitraum aufzuzeichnen. Zumindest ist es Aufgabe der vorliegenden Erfindung, eine Alternative zum Stand der Technik zu finden.

Die Erfindung löst die Aufgabe durch die Merkmale von Anspruch 1.

Demnach wird ein Verfahren zum Speichern von Messwerten einer Windenergieanlage oder eines Windparks vorgeschlagen. Messwerte umfassen hier gemessene Werte einer Messgröße, beispielsweise einer physikalischen Größe, aber auch Steuerparameter und/oder Regelparameter. Zunächst erfolgt ein Aufnehmen mehrerer zeitlich aufeinanderfolgender Messwerte einer Messgröße. Eine Messgröße bezeichnet hier diejenige physikalische oder einstellbare Größe, der eine Messung gilt. Vom Begriff Messgröße sind demnach auch einstellbare Parameter einer Steuer- oder Regelgröße umfasst. Allgemein kann ein Messwert auch als Datenwert gemäß der Erfindung bezeichnet werden, wobei eine Messgröße dann einer messbaren oder einstellbaren Größe entspricht, die unterschiedliche Datenwerte aufweisen oder annehmen kann. Vorzugsweise ist ein Messwert, der von einem Messgerät oder einer Messeinrichtung gelieferte oder zu liefernde Wert einer Messgröße.

Ferner wird eine Änderung zwischen einem vorherigen Messwert der aufgenommenen Messwerte und dem zeitlich darauffolgenden nachherigen Messwert der aufgenommenen Messwerte erfasst. Es werden demnach zwei aufeinanderfolgende Messwerte betrachtet, wobei der zeitlich zuerst gemessene Messwert als vorheriger Messwert bezeichnet und der zeitlich später gemessene Messwert als nachheriger Messwert bezeichnet wird. Zwischen dem vorherigen Messwert und dem nachherigen Messwert wird eine Änderung erfasst.

Die erfasste Änderung wird mit einem einstellbaren oder vordefinierten Schwellenwert verglichen. Zuletzt wird der nachherige Messwert gespeichert, wenn die Änderung oberhalb des Schwellenwerts liegt. Im Fall, dass die Änderung unterhalb des Schwellenwerts liegt, wird der nachherige Messwert verworfen, also nicht gespeichert.

Es kann somit ein Schwellenwert eingestellt oder vordefiniert werden und es werden Messwerte der Messgröße nur dann gespeichert, wenn diese eine Änderung zum vorherigen Messwert aufweisen, die oberhalb des Schwellenwerts liegt. Ein Speichern des nachherigen Messwerts erfolgt demnach nur im Fall, dass die Änderung, die zu diesem nachherigen Messwert führt, oberhalb des Schwellenwerts liegt.

Geringe Änderungen der Messwerte einer Messgröße, die also unterhalb des Schwellenwerts liegen, werden somit verworfen, so dass nur sich signifikant ändernde Messwerte, die sich durch eine Änderung oberhalb des Schwellenwerts anzeigen, gespeichert werden.

Hierbei liegt der Erfindung die Erkenntnis zugrunde, dass eine Vielzahl der betrachteten Messgrößen während des Betriebs einer Windenergieanlage oder eines Windparks im Wesentlichen immer oder zumindest über einen langen Zeitraum hinweg im Wesentlichen konstant bleiben. Dies gilt zumindest, wenn keine Auffälligkeiten oder Besonderheiten im Betrieb, die eine Abweichung von dem Normalbetrieb anzeigen, auftreten. Ein Speichern eines immer gleichen oder immer im Wesentlichen gleichen Messwerts einer Messgröße verbraucht demnach erheblichen Speicherplatz ohne einen Mehrwert für eine spätere Auswertung zu bieten. Ein Verwerfen von Messwerten, die sich demnach nicht von einem vorherigen Messwert unterscheiden, wird somit ermöglicht, ohne einen signifikanten Informationsverlust über die Daten der Messgröße für eine spätere Auswertung zu erhalten.

Gemäß einer ersten Ausführungsform umfasst das Aufnehmen mehrerer zeitlich aufeinanderfolgender Messwerte einer Messgröße das Aufnehmen aufeinanderfolgender Messwerte mit einem einstellbaren zeitlichem Abstand zwischen den einzelnen Aufnahmen der einzelnen Messwerte. Die Messwerte werden demnach mit einer dem zeitlichen Abstand entsprechenden Abtastrate aufgenommen und sind zeitlich somit äquidistant zueinander.

Durch Festlegen eines zeitlichen Abstands kann für die Messgröße definiert werden, ob schnelle Änderungen der Messgröße erkannt oder ausgeblendet werden. Außerdem kann so die Anzahl der zu erfassenden Änderungen einer Messgröße variiert und insbesondere optimiert werden, um weiter Speicherplatz zu reduzieren. Beispielsweise kann eine Messgröße, die einer Gondelposition einer Windenergieanlage entspricht und deren Messwerte demnach beispielsweise Werte in Grad umfassen, aufgenommen werden, indem der vordefinierte Schwellenwert vergleichsweise gering gewählt wird. Ein zeitlicher Abstand der Messwerte ist außerdem vergleichsweise groß wählbar. Für das Aufnehmen einer Netzfrequenz oder Spannung eines Netzes, mit dem die Windenergieanlage oder der Windpark zur Einspeisung von Energie verbunden ist, kann demgegenüber ein vergleichsweise hoher Schwellenwert und ein vergleichsweise geringerer zeitlicher Abstand gewählt werden. Eine Anpassung des Schwellenwerts und des zeitlichen Abstands an die Messgröße führt somit zur weiteren Reduzierung von benötigtem Speicherbedarf.

Gemäß einer weiteren Ausführungsform werden Messwerte mehrerer unterschiedlicher Messgrößen gespeichert, indem jeweils für jede der mehreren unterschiedlichen Messgrößen zeitlich aufeinanderfolgende Messwerte aufgenommen, die Änderungen zeitlich aufeinanderfolgender Messwerte erfasst und die Änderungen mit dem Schwellenwert verglichen werden. Gemäß dieser Ausführungsform wird jedoch für jede der Messgrößen jeweils ein individueller Schwellenwert vordefiniert oder eingestellt und der jeweiligen Messgröße zugeordnet. Der Vergleich der Änderung für die Messwerte der jeweiligen Messgröße erfolgt mit dem zugeordneten Schwellenwert.

Es werden demnach mehrere Messgrößen betrachtet und für jede der Messgrößen die Änderungen der Messwerte der Messgröße mit den Schwellenwerten, die der jeweiligen Messgröße zugeordnet sind, verglichen. Dementsprechend werden nachherige Messwerte einer Messgröße im Fall gespeichert, dass eine erfasste Änderung oberhalb des Schwellenwerts dieser Messgröße liegt. Anderenfalls werden die nachherigen Messwerte der Messgröße, nämlich, wenn deren erfasste Änderung unterhalb des Schwellenwerts dieser Messgröße liegt, verworfen.

Für unterschiedliche Messgrößen können so unterschiedliche Schwellenwerte eingestellt oder vordefiniert werden, so dass durch Anpassung des Schwellenwerts für die jeweilige Messgröße weiter Speicherplatz reduziert werden kann.

Gemäß einer weiteren Ausführungsform werden mehrere Messgrößen einer Gruppe zugeordnet. Im Fall, dass beim Vergleichen der Änderungen der Messwerte mindestens eine Änderung einer Messgröße der Gruppe erfasst wird, die oberhalb von dem der Messgröße zugeordneten Schwellenwert liegt, wird daraufhin der nachherige Messwert für diese Messgröße und zusätzlich der vorherige und/oder nachherige Messwert jeder weiteren Messgröße, die ebenfalls der Gruppe zugeordnet ist, gespeichert. Besonders bevorzugt wird für die Messgröße, die eine Änderung aufweist, die oberhalb von dem der Messgröße zugeordneten Schwellenwert liegt, der nachherige Messwert und für alle weiteren Messgrößen der zuletzt aufgenommene Messwert gespeichert.

Durch Bereitstellen der Gruppe können so mehrere Messgrößen, die in technischem Zusammenhang stehen, zusammengefasst werden. Im Fall, dass eine der Messgrößen der Gruppe eine beachtenswerte oder außergewöhnliche Änderung aufweist, die möglicherweise zu einer später gewünschten Auswertung führen kann, werden auch alle Messgrößen, die in technischem Zusammenhang damit stehen, aufgenommen. Eine Gesamtauswertung aller technischen im Zusammenhang miteinander stehenden Messgrößen, da für den betreffenden Zeitpunkt alle Messwerte gespeichert sind, ist daher möglich.

Gemäß einer weiteren Ausführungsform werden Messwerte mehrerer unterschiedlicher Messgrößen gespeichert, indem zeitlich aufeinanderfolgende Messwerte jeder Messgröße jeweils aufgenommen, die zeitlichen Änderungen der aufeinanderfolgenden Messwerte erfasst und diese Änderungen mit einem eingestellten oder vordefinierten oder den individuellen jeweils für die Messgröße vordefinierten oder eingestellten Schwellenwerten verglichen werden. Ferner wird jeder Messgröße auch jeweils ein individueller zeitlicherAbstand zugeordnet und das Aufnehmen der mehreren zeitlich aufeinanderfolgenden Messwerte der jeweiligen Messgröße wird mit dem zugeordneten zeitlichen Abstand durchgeführt.

Demnach werden unterschiedliche Abtastraten für die Messwerte der unterschiedlichen Messgrößen eingestellt oder vordefiniert. Der Speicheraufwand für zeitlich sich vergleichsweise nicht so häufig oder langsam ändernde Messwerte kann somit weiter reduziert werden, während Messwerte, die sich vergleichsweise schnell oder häufig ändern, mit einer höheren Abtastrate, also einem geringeren zeitlichen Abstand, weiterhin so aufgenommen werden können, dass alle signifikanten Änderungen erfasst werden können.

Gemäß einer weiteren Ausführungsform werden unabhängig von einem Vergleich der Änderung der aufeinanderfolgenden Werte und dem Vergleich der Änderung mit dem vordefinierten Schwellenwert, die Messwerte jeder Messgröße zu vordefinierten Zeitpunkten oder nach Ablauf einer für die jeweilige Messgröße vordefinierte oder eingestellte Dauer gespeichert. Hierdurch wird verhindert, dass ein Messwert, der sich sehr langsam in geringem Maße ändert und somit eine Änderung immer unterhalb des für die Messgröße vordefinierten Schwellenwerts bleibt, lange Zeit, bis nämlich eine Änderung oberhalb des Schwellenwerts erkannt wird, nicht aufgenommen oder gespeichert wird.

Gemäß einer weiteren Ausführungsform wird der Schwellenwert für den Vergleich der Messwerte einer Messgröße automatisch erhöht, wenn mehr als eine vordefinierte Maximalanzahl von Messwerten innerhalb eines vordefinierten Zeitraums gespeichert werden. Der vordefinierte Zeitraum ist hierbei vorzugsweise länger gewählt als ein Zeitraum, der für die Messgröße relevant für eine Betrachtung einer besonderen oder fehlerhaften Situation wäre. Der vordefinierte Zeitraum ist demnach beispielsweise auf einen langen Zeitraum von mehreren Minuten oder sogar Stunden zu definieren. Hierdurch kann sichergestellt werden, dass im Fall, dass der Schwellenwert zu niedrig gewählt wird und daher eine zu große Anzahl von Messwerten einer Messgröße gespeichert werden, der Schwellenwert automatisch erhöht wird, so dass die Anzahl der nach der Änderung zu speichernden Messwerte reduziert wird. Eine automatische Anpassung des Schwellenwerts führt zur weiteren Verminderung des Speicherbedarfs.

Gemäß einer weiteren Ausführungsform wird der Schwellenwert für den Vergleich der Messwerte einer Messgröße automatisch abgesenkt, wenn innerhalb eines vordefinierten Beobachtungszeitraums, der vorzugsweise wesentlich geringer als der zuvor genannte vordefinierte Zeitraum ist, vordefinierte Bedingungen vorliegen. Diese vordefinierten Bedingungen umfassen beispielsweise eine erfasste Änderung der aufeinanderfolgenden Messwerte, die oberhalb von einem zweiten Schwellenwert liegt oder mehrere unmittelbar aufeinanderfolgende erfasste Änderungen einer Messgröße, die oberhalb des Schwellenwerts liegen. Somit kann sichergestellt werden, dass eine durch die vordefinierten Bedingungen erfasste, möglicherweise interessierende Schwankung der Messwerte einer Messgröße mit einer höheren Genauigkeit gespeichert wird. Besonders bevorzugt erfolgt die Absenkung des Schwellenwerts für eine vordefinierte Dauer, wobei nach Ablauf der vordefinierten Dauer der abgesenkte Schwellenwert wieder zurückgesetzt wird.

Somit können interessierende Bereiche höher aufgelöst und die Messwerte dieses interessierenden Bereichs automatisch in besserer Auflösung erfasst werden. Zudem kann nach Ablauf der vordefinierten Dauer angenommen werden, dass die Messgröße sich wieder innerhalb normaler Parameter bewegt, so dass entsprechend auch der Schwellenwert wieder zurückgesetzt werden kann.

Gemäß einer weiteren Ausführungsform umfasst jeder gespeicherte Messwert einen Zeitstempel. Der Messwert wird demnach zusammen mit einem Zeitstempel gespeichert, so dass nachvollziehbar ist, zu welchem Zeitpunkt der Messwert gespeichert wurde.

Messwerte werden gemäß der Erfindung unregelmäßig und nicht mehr mit einer festen Abtastrate gespeichert. Durch die Zeitstempel ist es jedoch möglich, eine Vergleichbarkeit der Messwerte unterschiedlicher Messgrößen zu ermöglichen, indem Messwerte unterschiedlicher Messgrößen, aber mit gleichem oder nahe beieinanderliegendem Zeitstempel, ausgewertet werden können.

Gemäß einer weiteren Ausführungsform umfasst der Zeitstempel eine Uhrzeit oder einen Tageszeitzähler. Der Zeitstempel ist jedoch datumlos. Der Speicheraufwand wird demnach reduziert, indem dem Zeitstempel lediglich eine Uhrzeit oder ein Zähler zugeordnet wird, aus dem sich eine Uhrzeit ableiten lässt.

Gemäß einer Ausführungsform werden Messwerte, die an unterschiedlichen Tagen aufgenommen werden, innerhalb unterschiedlicher Dateien gespeichert. Die Dateien werden mit einem Indikator versehen, der den Tag angibt, an dem die in der Datei enthaltenen Messwerte aufgenommen wurden. Es ist demnach möglich, durch den Indikator der Datei, beispielsweise den Dateinamen, auf den Tag zu schließen, an dem die Messwerte der Datei aufgenommen wurden.

Gemäß einer weiteren Ausführungsform umfasst eine erste Gruppe mehrerer oder aller der Messgrößen Netzspannung, Netzwirkleistung, Netzblindleistung und Netzfrequenz. Besonders bevorzugt sind die Dateien, in denen die Messwerte gespeichert werden jeweils kleiner als 5 MB, bevorzugt kleiner als 2 MB oder besonders bevorzugt kleiner als 1 MB. Weiter bevorzugt werden die Messwerte in Excel-Dateien oder als CSV-Datei gespeichert.

Außerdem betrifft die Erfindung eine Windparksteuerung, die eingerichtet ist, die Schritte des Verfahrens auszuführen.

Gemäß einer Ausführungsform umfasst die Windparksteuerung einen Anschluss für eine Datenleitung zur Verbindung mit mehreren Windenergieanlagen und zum Empfangen von Messwerten von den mehreren Windenergieanlagen zum Speichern der Messwerte gemäß dem Verfahren.

Außerdem betrifft die Erfindung einen Windpark mit einer Windparksteuerung gemäß der vorgenannten Ausführungsform.

Weitere Ausführungsformen ergeben sich anhand der in den Figuren näher erläuterten Ausführungsbeispiele. Hierbei zeigen:
- Figur 1: eine Windenergieanlage,
- Figur 2: einen Windpark,
- Figur 3: die Schritte eines Verfahrens gemäß einem Ausführungsbeispiel und
- Figur 4: eine Gruppe von zwei Messgrößen.

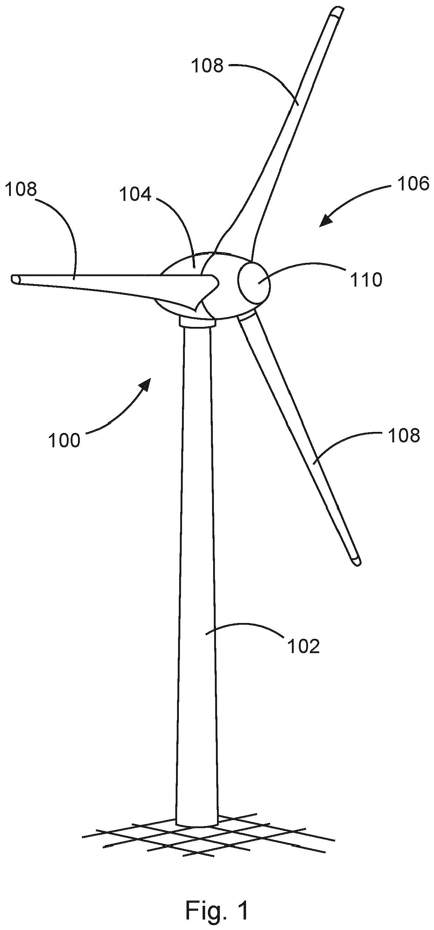

Figur 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

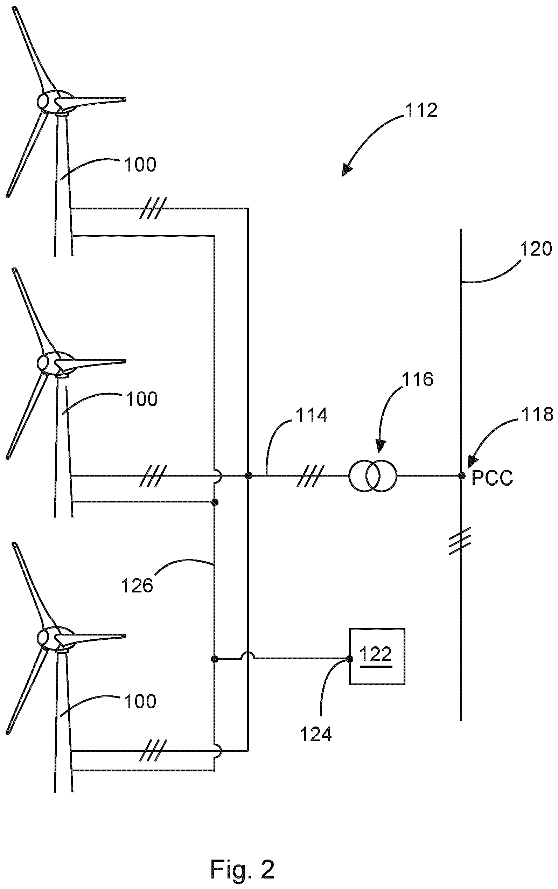

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Außerdem umfasst der Windpark 112 eine Windparksteuerung 122, die eine Datenschnittstelle 124 aufweist. Die Datenschnittstelle 124 ist mit den Windenergieanlagen 100 über eine Datenleitung 126 verbunden, um Messwerte von den Windenergieanlagen 100 zu empfangen und Steuer- oder Regeldaten an die Windenergieanlagen 100 zu senden.

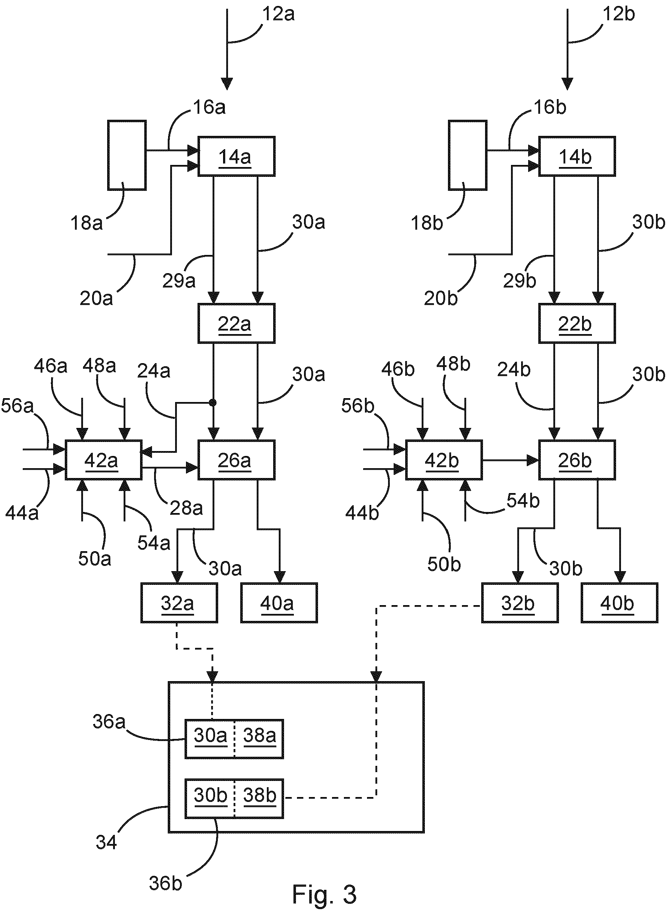

Figur 3 zeigt ein Verfahren 10 gemäß einem Ausführungsbeispiel der Erfindung. In Figur 3 wird das Verfahren 10 zum Aufzeichnen von Messwerten mehrerer Messgrößen dargestellt. Demnach sind auf der linken Seite der Figur 3 die Schritte zum Aufnehmen der ersten Messgröße 12a und auf der rechten Seite der Figur 3 die Schritte zum Aufnehmen der zweiten Messgröße 12b dargestellt. Die Schritte laufen parallel ab.

Zunächst wird mit Bezug auf die erste Messgröße 12a das Verfahren 10 beschrieben. In einem Schritt 14a werden Messwerte 16a von einem Sensor 18a aufgenommen. Hierzu wird ein zeitlicher Abstand 20a zugeführt, mit dem die Messwerte 16a aufgenommen werden. Im darauffolgenden Schritt 22a wird eine Änderung zwischen einem vorherigen Messwert 29a der zeitlich aufeinanderfolgenden aufgenommenen Messwerte 16a und einem zeitlich darauffolgenden nachherigen Messwert 30a der aufgenommenen zeitlich aufeinanderfolgenden Messwerte 16a erfasst. Die Änderung 24a wird an einen Schritt 26a übergeben, dem ein Schwellenwert 28a zugeführt wird, um im Schritt 26a die Änderung 24a mit dem Schwellenwert 28a zu vergleichen.

Ergibt der Vergleich, dass die Änderung 24a oberhalb des vordefinierten Schwellenwerts 28a liegt, wird der nachherige Messwert 30a einem Schritt 32a übergeben, in dem der nachherige Messwert 30a in einer Datei 34 gespeichert wird. Der nachherige Messwert 30a wird in einem Eintrag 36a zusammen mit einem Zeitstempel 38a gespeichert. Ergibt der Vergleich im Schritt 26a, dass die Änderung 24a unterhalb des vordefinierten Schwellenwerts 28a liegt, so wird der nachherige Messwert 30a im Schritt 40a verworfen.

Ferner ist ein Schritt 42a vorgesehen, mit dem der Schwellenwert 28a, der beim Vergleich 26a berücksichtigt wird, anpassbar ist. Im Schritt 42a wird geprüft, ob innerhalb eines vordefinierten Beobachtungszeitraums 44a vordefinierte Bedingungen 46a vorliegen. Diese vordefinierten Bedingungen 46a umfassen beispielsweise eine Änderung 24a der aufeinanderfolgenden Messwerte 16a oberhalb von einem zweiten vordefinierten Schwellenwert 48a oder mehrere aufeinanderfolgende Änderungen 24a oberhalb des Schwellenwerts 28a, also mehrere nachherige Messwerte 30, die innerhalb des Beobachtungszeitraums gespeichert werden. Ist dies der Fall, liegen nämlich die Bedingungen 46a innerhalb des Beobachtungszeitraums 44a vor, wird der Schwellenwert 28a abgesenkt, um eine genauere Auflösung durch vergleichsweise häufigeres Speichern zu erreichen. Nach Ablauf einer vordefinierten Dauer 50a wird dann der Schwellenwert 28a wieder zurückgesetzt. Alternativ ist es auch möglich, im Schritt 42a den Schwellenwert 28a zu vergrößern. Dies erfolgt beispielsweise, wenn eine vordefinierte Maximalanzahl 54a von Messwerten 16a innerhalb eines vordefinierten Zeitraums 56a aufgenommen werden. Hier ist dies als Indiz dafür zu nehmen, dass der Schwellenwert 28a vergleichsweise zu niedrig angesetzt ist und zu viele Werte gespeichert werden, wodurch zu viel Speicherplatz verbraucht wird.

Die Schritte des Verfahrens werden für jeden aufgenommenen Messwert 16a zyklisch wiederholt. Das heißt, dass ein erster Zyklus beginnt, nachdem zwei aufeinanderfolgende Messwerte 16a aufgenommen wurden, von denen einer der Messwerte 16a einem vorherigen Messwert 29a und der später aufgenommene Messwert 16a der nachherige Messwert 30a ist. Das Verfahren 10, nämlich zumindest das Erfassen der Änderung 24a und der Vergleich mit dem Schwellenwert 28a werden für diese beiden Messwerte 16a ausgeführt. Wird ein neuer Messwert 16a aufgenommen, so beginnt ein neuer Zyklus der gezeigten Schritte, da der nachherige Messwert 30a dann zum vorherigen Messwert 29a wird und der neu aufgenommene Messwert 16a nun dem nachherigen Messwert 30a entspricht. So werden für diese beiden Messwerte 16a die Änderung 24a erfasst und diese Änderung 24a mit dem vordefinierten Schwellenwert 28a verglichen. Parallel sind auf der rechten Seite die identischen Schritte für die zweite Messgröße 12b dargestellt. Gleiche Bezugsziffern mit nachfolgendem Buchstaben "b" entsprechen demnach den Schritten für eine zweite Messgröße 12b, die oben bereits für die erste Messgröße 12a beschrieben und für die erste Messgröße mit einem "a" gekennzeichnet wurden.

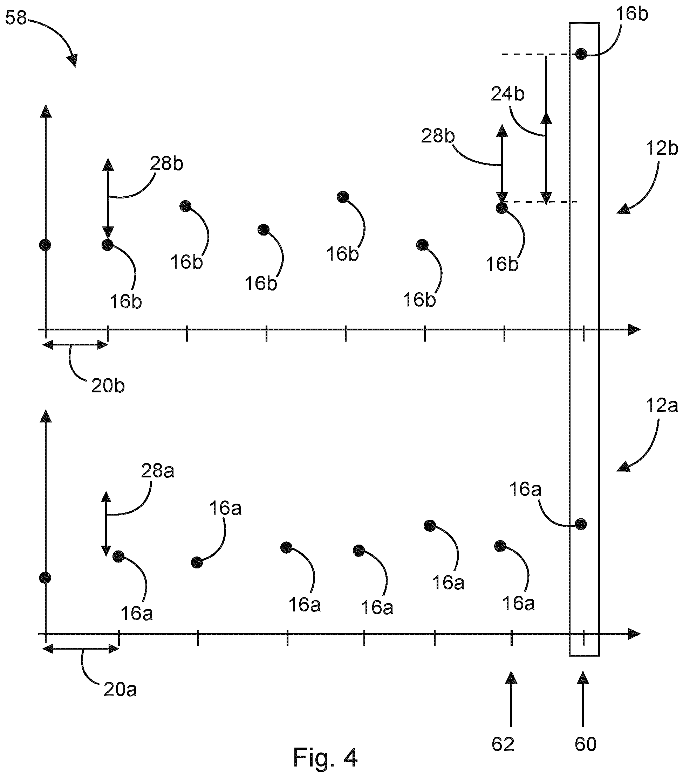

Figur 4 zeigt die Gruppierung zweier Messgrößen, beispielsweise der Messgrößen 12a, 12b aus Figur 3. Die Messgrößen 12a, 12b werden mit dem zeitlichen Abstand 20a der ersten Messgröße 12a, der hier zur besseren Übersicht dem zeitlichen Abstand 20b der zweiten Messgröße 12b entspricht, aufgenommen. Für beide Messgrößen 12a, 12b sind jedoch unterschiedliche Schwellenwerte 28a, 28b festgelegt. Die Messwerte 16a der ersten Messgröße 12a sind im Wesentlichen konstant, so dass eine Änderung 24a immer unterhalb des Schwellenwerts 28a liegt. Die aufgenommenen Messwerte 16a würden demnach nicht gespeichert, sondern immer verworfen werden. Im Zeitpunkt 60 wird jedoch festgestellt, dass sich der Messwert 16b gegenüber seinem vorherigen Messwert 29b im Zeitpunkt 62 um mehr als den Schwellenwert 28b geändert hat, nämlich um die Änderung 24b. Demnach wird der Messwert 16b im Zeitpunkt 62, der dem nachherigen Messwert 30b entspricht, gespeichert und gleichzeitig, da der zeitlich gleichzeitig auftretende Messwert 16a zu einer Messgröße 12a gehört, die mit der Messgröße 12b in einer Gruppe 58 zusammengefasst ist, ebenfalls gespeichert. Demnach werden zum Zeitpunkt 60 die Messwerte 16a, 16b gespeichert.

### Bezuqszeichenliste

- 10: Verfahren
- 12a, 12b: Messgröße
- 14a, 14b: Aufnahme Messwerte
- 16a, 16b: Messwerte
- 18a, 18b: Sensor
- 20a, 20b: vordefinierter zeitlicher Abstand
- 22a, 22b: Erfassen Änderung
- 24a, 24b: Änderung
- 26a, 26b: Vergleichen Änderung mit Schwellenwert
- 28a, 28b: Schwellenwert
- 29a, 29b: vorheriger Messwert
- 30a, 30b: nachheriger Messwert
- 32a, 32b: Speichern nachheriger Messwert
- 34: Datei
- 36a, 36b: Eintrag
- 38a, 38b: Zeitstempel
- 40a, 40b: Verwerfen nachheriger Messwert
- 42a, 42b: Anpassen Schwellenwert
- 44a, 44b: vordefinierter Beobachtungszeitraum
- 46a, 46b: vordefinierte Bedingungen
- 48a, 48b: zweiter vordefinierter Schwellenwert
- 50a, 50b: vordefinierte Dauer
- 54a, 54b: vordefinierte Maximalanzahl
- 56a, 56b: vordefinierter Zeitraum
- 58: Gruppe
- 60: Zeitpunkt
- 62: Zeitpunkt
- 100: Windenergieanlage
- 102: Turm
- 104: Gondel
- 106: aerodynamischer Rotor
- 108: Rotorblätter
- 110: Spinner
- 112: Windpark
- 114: elektrisches Parknetz
- 116: Transformator
- 118: Einspeisepunkt
- 120: Versorgungsnetz
- 122: Windparksteuerung
- 124: Datenschnittstelle
- 126: Datenleitung

## Patentansprüche

1. Verfahren (10) zum Speichern von Messwerten (16a, 16b) einer Windenergieanlage (100) oder eines Windparks (112), umfassend:
a) Aufnehmen (14a, 14b) mehrerer zeitlich aufeinanderfolgender Messwerte (16a, 16b) einer Messgröße (12a, 12b),
b) Erfassen (22a, 22b) einer Änderung (24a, 24b) zwischen einem vorherigen Messwert (29a, 29b) der aufgenommenen Messwerte (16a, 16b) und dem zeitlich darauffolgenden nachherigen Messwert (30a, 30b) der aufgenommenen Messwerte (16a, 16b),
c) Vergleichen (26a, 26b) der Änderung (24a, 24b) mit einem einstellbaren oder vordefinierten Schwellenwert (28a, 28b) und
d) Speichern (32a, 32b) des nachherigen Messwerts (30a, 30b) im Fall, dass die Änderung (24a, 24b) oberhalb des vordefinierten Schwellenwerts (28a, 28b) liegt oder
e) Verwerfen (40a, 40b) des nachherigen Messwerts (30a, 30b) im Fall, dass die Änderung (24a, 24b) unterhalb des vordefinierten Schwellenwerts (28a, 28b) liegt.

2. Verfahren (10) nach Anspruch 1, wobei das Aufnehmen (14a, 14b) mehrerer zeitlich aufeinanderfolgender Messwerte (16a, 16b) einer Messgröße (12a, 12b) mit einem einstellbaren zeitlichen Abstand (20a, 20b) erfolgt.

3. Verfahren (10) nach Anspruch 1 oder 2, wobei Messwerte (16a, 16b) mehrerer unterschiedlicher Messgrößen (12a, 12b) gespeichert werden, indem die Schritte a) bis c) oder a) bis d) jeweils für die mehreren unterschiedlichen Messgrößen (12a, 12b) ausgeführt werden, wobei jeder der Messgrößen (12a, 12b) jeweils ein individueller Schwellenwert (28a, 28b) zugeordnet wird und der Vergleich (26a, 26b) der Änderung (24a, 24b) für die Messwerte (16a, 16b) der jeweiligen Messgröße (12a, 12b) mit dem zugeordneten Schwellenwert (28a, 28b) durchgeführt wird.

4. Verfahren (10) nach einem der vorherigen Ansprüche, wobei mehrere Messgrößen (12a, 12b) einer Gruppe (58) zugeordnet werden, wobei im Fall, dass beim Vergleich (26a, 26b) im Schritt c) eine Änderung (24a, 24b) mindestens einer der Messgrößen (12a, 12b) der Gruppe (58) erfasst wird, die oberhalb des der Messgröße (12a, 12b) zugeordneten Schwellenwerts (28a, 28b) liegt, Schritt d) für diese mindestens eine Messgröße (12a, 12b) ausgeführt wird und der vorherige und/oder nachherige Messwert (29a, 29b, 30a, 30b), insbesondere der zuletzt aufgenommene Messwert jeder weiteren Messgröße (12a, 12b) derselben Gruppe (58) jeweils gespeichert wird.

5. Verfahren (10) nach einem der vorherigen Ansprüche, wobei Messwerte (16a, 16b) mehrerer unterschiedlicher Messgrößen (12a, 12b) gespeichert werden, indem die Schritte a) bis c) oder a) bis d) jeweils für die mehreren unterschiedlichen Messgrößen (12a, 12b) ausgeführt werden, wobei jeder der Messgrößen (12a, 12b) jeweils ein individueller zeitlicher Abstand (20a, 20b) zugeordnet wird und das Aufnehmen (14a, 14b) der mehreren zeitlich aufeinanderfolgenden Messwerte (16a, 16b) der jeweiligen Messgröße (12a, 12b) mit dem zugeordneten zeitlichen Abstand (20a, 20b) durchgeführt wird.

6. Verfahren (10) nach einem der vorhergehenden Ansprüche, wobei unabhängig von Schritt c) Messwerte (16a, 16b) jeder Messgröße (12a, 12b) zu vordefinierten Zeitpunkten oder nach Ablauf einer für die jeweilige Messgröße (12a, 12b) vordefinierten oder eingestellten Dauer gespeichert werden.

7. Verfahren (10) nach einem der vorhergehenden Ansprüche, wobei der Schwellenwert (28a, 28b) für den Vergleich der Messwerte (16a, 16b) einer Messgröße (12a, 12b) automatisch erhöht wird, wenn mehr als eine vordefinierte Maximalanzahl (54a, 54b) von Messwerten (16a, 16b) innerhalb eines vordefinierten Zeitraums (56a, 56b) gespeichert werden.

8. Verfahren (10) nach einem der vorhergehenden Ansprüche, wobei der Schwellenwert (28a, 28b) für den Vergleich der Messwerte (16a, 16b) einer Messgröße (12a, 12b) automatisch abgesenkt wird, wenn innerhalb eines vordefinierten Beobachtungszeitraums (44a) vordefinierte Bedingungen (46a) vorliegen, umfassend:
- eine erfasste Änderung (24a, 24b) oberhalb eines zweiten Schwellenwerts (48a, 48b),
- mehrere aufeinanderfolgende Änderungen (24a, 24b) oberhalb des Schwellenwerts (28a, 28b),
wobei die Absenkung vorzugsweise nur für eine vordefinierte Dauer (50a) erfolgt und nach Ablauf der vordefinierten Dauer (50a) der abgesenkte Schwellenwert (28a, 28b) wieder zurückgesetzt wird.

9. Verfahren (10) nach einem der vorherigen Ansprüche, wobei für jeden gespeicherten Messwert (16a, 16b) ein Zeitstempel (38) gespeichert wird.

10. Verfahren (10) nach Anspruch 9, wobei der Zeitstempel (38) eine Uhrzeit oder einen Tageszeitzähler umfasst und datumlos ist.

11. Verfahren (10) nach einem der vorhergehenden Ansprüche, wobei Messwerte (16a, 16b), die an unterschiedlichen Tagen aufgenommen werden, innerhalb unterschiedlicher Dateien (34) gespeichert werden, wobei die Dateien (34) mit einem Indikator für den Tag versehen werden, an dem die in der Datei (34) enthaltenen Messwerte (16a, 16b) aufgenommen wurden.

12. Verfahren (10) nach einem der vorhergehenden Ansprüche, wobei eine Gruppe (58) von Messgrößen vordefiniert wird, die mehrere oder alle umfasst von einer Netzspannung, einer Netzwirkleistung, einer Netzblindleistung und einer Netzfrequenz und/oder wobei jede der Dateien (34) zum Speichern der Messwerte (16a, 16b) kleiner als 5 MB, bevorzugt kleiner als 2 MB oder besonders bevorzugt kleiner als 1 MB, ist und/oder die Dateien (34) Excel-Dateien oder CSV-Dateien sind.

13. Windparksteuerung (122), die eingerichtet ist, das Verfahren nach einem der vorhergehenden Ansprüche auszuführen.

14. Windparksteuerung (122) nach Anspruch 13, wobei die Windparksteuerung eine Datenschnittstelle (124) für eine Datenleitung (126) aufweist, um Messwerte (16a, 16b) von mehreren Windenergieanlagen (100) zu empfangen.

15. Windpark (112) mit einer Windparksteuerung nach Anspruch 13 oder 14.
